Europäisches Patentamt

European Patent Office

Office européen des brevets

(11) Publication number: **0 164 271**
**B1**

(12) **EUROPEAN PATENT SPECIFICATION**

(45) Date of publication of patent specification: **04.10.89**

(51) Int. Cl.⁴: **F 16 B 7/04**

(21) Application number: **85304055.8**

(22) Date of filing: **07.06.85**

(54) A connector for a framework structure.

(30) Priority: **07.06.84 GB 8414503**

(43) Date of publication of application:
**11.12.85 Bulletin 85/50**

(45) Publication of the grant of the patent:
**04.10.89 Bulletin 89/40**

(84) Designated Contracting States:
**BE CH DE FR IT LI NL SE**

(56) References cited:
**DE-B-1 684 486**
**DE-B-1 708 005**
**DE-C- 434 374**

**TECHNIQUES & ARCHITECTURE, no. 309, May 1976, pages 39-53, Paris, FR; Z.S. MAKOWSKI "Structures spatiales, un bilan et tendances"**

(73) Proprietor: **Stephenson, Colin John Stewart**
**3 Erskine Road Primrose Hill**
**London NW3 3AJ (GB)**

(72) Inventor: **Stephenson, Colin John Stewart**
**3 Erskine Road Primrose Hill**
**London NW3 3AJ (GB)**

(74) Representative: **Higgins, Michael Roger et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a connector of a type suitable for connecting together elongate members to form a framework structure which may be used, for example, as a display structure, and also relates to a frame work structure including such connectors.

According to a first aspect of the invention, there is provided a connector formed of plastics material and comprising a hub and a plurality of projections, equi-angularly spaced around an axis and of identical or substantially identical non-circular cross-section extending outwardly from the hub wherein at least alternate projections are each joined to the hub by an integral plastics hinge.

Preferably, there are two groups of projections, the projections of one group alternating with the projections of the other group, and the projections of the one group being rigidly joined to the hub so as to extend therefrom in a common plane while the projections of the other group are joined to the hub by integral hinges so that they can pivot from positions in which they lie parallel to said common plane to positions in which they are inclined to said common plane.

Alternatively, all projections are joined to the hub by integral hinges so that they can pivot from positions in which they all lie in or are parallel to a single plane to positions in which they are each inclined to said single plane.

Advantageously, each projection is of triangular or substantially triangular cross-section. In this case, if only alternate projections are joined to the hub by integral hinges the apices of the two groups of projections are conveniently arranged to face in opposite directions as considered with the hinged projections in positions in which they lie parallel to said common plane. However, if all projections are joined to the hub by integral hinges then conveniently the apices of all projections face in the same direction as considered with the projections in positions in which they all lie in or are parallel to said single plane.

According to a second aspect of the invention, there is provided a framework structure comprising a plurality of connectors according to the first aspect of the invention and a plurality of elongate members, preferably but not necessarily having cylindrical or substantially cylindrical tubular ends at least, which have been push-fitted onto the projections.

Preferably, at least the cylindrical ends of the elongate members are of deformable plastics material.

The invention will now be more particularly described by way of example, with reference to the accompanying drawings, in which:-

Figure 1 is a view of one end of one embodiment of a connector according to the first aspect of the invention,

Figure 2 is a view of the other end of the connector shown in Figure 1,

Figure 3 is a side view of the connector shown in Figures 1 and 2, and

Figure 4 is a schematic view on a much reduced scale showing a plurality of elongate members connected together by connectors of Figures 1—3 to form a space frame.

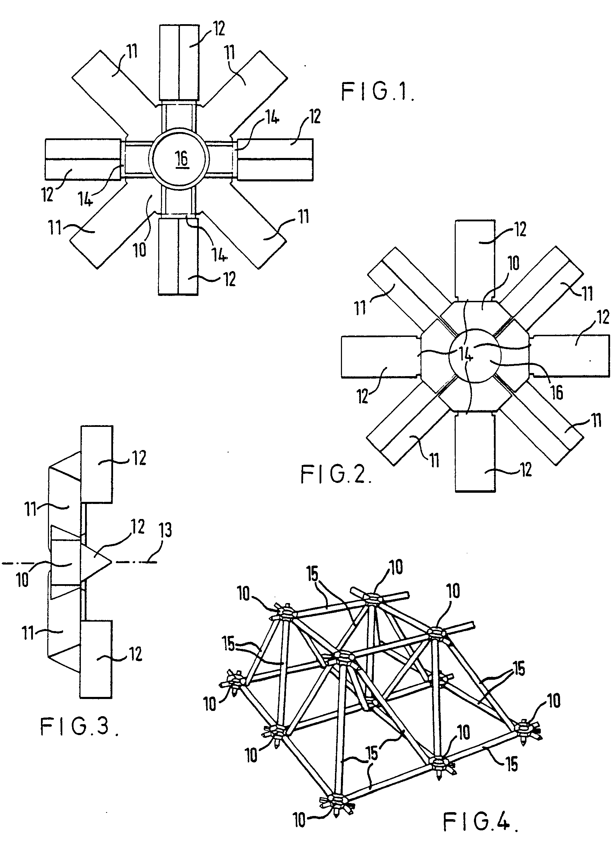

Referring firstly to Figures 1—3, the connector shown therein is formed of plastics material and comprises an octagonal hub 10, a first group of projections 11 and a second group of projections 12, each projection extending outwardly from the hub 10.

The projections 11 and 12 are equiangularly spaced around an axis 13 of the hub and the projections 11 alternate with the projections 12. As shown all projections 11 and 12 are of triangular cross-section but they could be of other non-circular cross-section.

The projections 11 are rigidly joined to the hub 10 so as to extend radially therefrom in a common plane normal to the axis 13. They also lie substantially between two parallel planes containing the two end faces, respectively, of the hub 10. The projections 12 are joined to the hub 10 by integral hinges 14 which permit the projections 12 to pivot from positions in which they are parallel to said common plane containing the projections 11 to positions in which they are inclined to said common plane on either side thereof.

When, as shown in the drawings, the projections 12 are parallel to said common plane they lie substantially outside of the region between the two planes containing the two end faces, respectively, of the hub and their apices face in an opposite direction to the apices of the projections 11.

A plurality of such connectors can be used to connect together elongate members in the form of deformable plastics tubes 15 (see Figure 4) of circular cross-section to form a space frame which may be used, for example, as a display stand. In order to locate a tube 15 on a projection 11, 12, an end of the tube is deformed, by hand pressure, is pushed over the projection and is then released. The inner wall of the tube is engaged by each of the three edges of the projection as an interference fit. If desired, the three edges of each projection may be less abrupt than shown: this being achieved by rounding off the edges or providing flats at the edges.

In order to create the framework structure shown in Figure 4, the projections 12 are inclined at 45° to the axis 13. They may be inclined, however, at other angles to the axis 13 in order to make other structures.

The hub 10 has a through hole 16 so that it may be mounted on a vertical support column to mount the framework structure at an elevated position.

Instead of the tubes 15, solid rods, with deformable plastics sockets of circular cross-section at each end, could be used.

If desired, the tubes 15 could be heat welded or secured by fasteners to the projections 11, 12 in order to provide a permanent installation, or if the tubes 15 and connectors 11, 12 are of the same material, the tubes may be secured to the projections of the connectors by adhesive.

The connectors and tubes described above could be scaled down for use as a toy or an architect's model, and such a toy or model falls within the scope of the invention.

In an alternative embodiment, all eight projections could be joined to the hub by integral hinges. In this case, however, it would be preferable for the apices of all projections to face in the same direction. Such a connector could be used to create, for example, a geodesic dome.

Other modifications could be made without departing from the scope of the invention. For example, the connector could have more or less than eight projections.

## Claims

1. A connector formed of plastics material and comprising a hub (10) and a plurality of projections (11 and 12), equi-angularly spaced around an axis (13) and of identical or substantially identical non-circular cross-section extending outwardly from the hub wherein at least alternate projections (12) are each joined to the hub by an integral plastics hinge (14).

2. The connector of Claim 1, wherein there are two groups of projections, the projections (11) of one group alternating with the projections (12) of the other group, and the projections (11) of the one group being rigidly joined to the hub (10) so as to extend therefrom in a common plane while the projections (12) of the other group are joined to the hub by integral hinges (14) so that they can pivot from positions in which they lie parallel to said common plane to positions in which they are inclined to one side of said common plane.

3. The connector of Claim 2, wherein the projections (11) of the one group lie substantially between two parallel planes containing opposite end faces, respectively, of the hub (10) and the projections (12) of the other group lie substantially outside of the region between said two planes.

4. The connector of claim 2 or claim 3, wherein there is at least four projections in each group.

5. The connector of Claim 1, wherein all projections (11 and 12) are joined to the hub (10) by integral hinges (14) so that they can pivot from positions in which they all lie in or are parallel to a single plane to positions in which they are each inclined to said single plane.

6. The connector of anyone of the preceding Claims, wherein each projection (11 and 12) is of triangular or substantially triangular cross-section.

7. The connector of Claim 6 when dependent on any one of Claims 2—4, wherein the apices of the two groups of projections (11 and 12) are arranged to face in opposite directions as considered with the hinged projections (12) in positions in which they lie parallel to said common plane.

8. The connector of Claim 6 when dependent on Claim 5, wherein the apices of all projections (11 and 12) face in the same direction as considered with the projections in positions in which they all lie in or are parallel to said single plane.

9. The connector of anyone of the preceding Claims, wherein the hub (10) has a hole (16) extending axially therethrough.

10. A framework structure comprising a plurality of connectors as set forth in anyone of the preceding Claims and a plurality of elongate members (15) which have been push-fitted onto the projections (11 and 12).

11. The framework structure of claim 10, wherein the elongate members (15) have cylindrical or substantially cylindrical tubular ends at least.

12. The framework structure of Claim 11, wherein at least the cylindrical ends of the elongate members (15) are of deformable plastics material.

## Patentansprüche

1. Verbindungselement, gebildet aus Kunststoffmaterial und umfassend eine Nabe (10) sowie eine Vielzahl von Vorsprüngen (11 und 12), die unter gleichem Winkelabstand um eine Achse (13) identischen oder im wesentlichen identischen nicht-kreisförmigen Querschnitts angeordnet sind und sich von der Nabe nach außen erstrecken, wobei wenigstens alternierende Vorsprünge (12) je mit der Nabe über ein einstückiges Kunststoffgelenk (14) verbunden sind.

2. Verbindungselement nach Anspruch 1, wobei zwei Gruppen von Vorsprüngen vorgesehen sind, wobei die Vorsprünge (11) einer Gruppe mit den Vorsprüngen (12) der anderen Gruppe alternieren und die Vorsprünge (11) der einen Gruppe steif mit der Nabe (10) derart verbunden sind, daß sie von dieser in einer gemeinsamen Ebene abstehen, während die Vorsprünge (12) der anderen Gruppe mit der Nabe durch einstückige Gelenke (14) verbunden sind, so daß sie aus Stellungen, in der sie parallel zu dieser gemeinsamen Ebene liegen, in Stellungen verschwenken können, in der sie zu einer Seite dieser gemeinsamen Ebene geneigt sind.

3. Verbindungselement nach Anspruch 2, wobei die Vorsprünge (11) der einen Gruppe im wesentlichen zwischen zwei parallelen jeweils gegenüberliegende Stirnflächen der Nabe (10) enthaltenden Ebenen liegen und die Vorsprünge (12) der anderen Gruppe im wesentlichen außerhalb dieses Bereiches zwischen diesen Ebenen liegen.

4. Verbindungselement nach Anspruch 2 oder 3, wobei wenigstens vier Vorsprünge in jeder Gruppe vorgesehen sind.

5. Verbindungselement nach Anspruch 1, wobei sämtliche Vorsprünge (11 und 12) mit der Nabe (10) über einstückige Gelenke (14) verbunden sind, so daß sie Ausstellungen, in der sie sämtlich in einer einzigen Ebene oder parallel zu dieser liegen, in Stellungen verschwenken können, in denen sie zu dieser einzigen Ebene geneigt sind.

6. Verbindungselement nach einem der vorhergehenden Ansprüche, wobei jeder Vorsprung (11 und 12) von kreisförmigem oder im wesentlichen kreisförmigem Querschnitt ist.

7. Verbindungselement nach Anspruch 6, abhängig von einem der Ansprüche 2 bis 4, wobei die Scheitel der beiden Gruppen von Vorsprüngen (11 und 12) so angeordnet sind, daß sie in entgegengesetzte Richtungen, betrachtet mit den Gelenkvorsprüngen (12) in Stellungen weisen, in denen sie parallel zu dieser gemeinsamen Ebene liegen.

8. Verbindungselement nach Anspruch 6, wenn abhängig von Anspruch 5, wobei die Scheitel sämtlicher Vorsprünge (11 und 12) in der gleichen Richtung, so betrachtet weisen, daß die Vorsprünge in Stellungen sind, in welchen sie sämtlich in oder parallel zu dieser einzigen Ebene liegen.

9. Verbindungselement nach einem der vorhergehenden Ansprüche, wobei die Nabe (10) über ein axial durchgehendes Loch (16) verfügt.

10. Fachwerkkonstruktion mit einer Vielzahl von Verbindungselementen nach einem der vorhergehenden Ansprüche und einer Vielzahl von länglichen Elementen (15), die auf die Vorsprünge (11 und 12) mit Schiebesitz aufgebracht sind.

11. Fachwerkkonstruktion nach Anspruch 10, wobei die länglichen Elemente (15) zylindrische oder im wesentlichen zylindrische röhrenförmige Enden wenigstens aufweisen.

12. Fachwerkkonstruktion nach Anspruch 11, wobei wenigstens die zylindrischen Enden der länglichen Elemente (15) aus verformbarem Kunststoff, insbesondere Plastikmaterial, bestehen.

**Revendications**

1. Dispositif d'assemblage constitué en matière plastique et comportant un noyau (10) ainsi que plusieurs saillies (11 et 12) espacées d'un angle constant autour d'un axe (13), présentant des sections transversales non circulaires identiques ou sensiblement identiques et s'étendant vers l'extérieur à partir du noyau, dans lequel au moins certaines saillies intermédiaires sont reliées au noyau chacune par une articulation en matière plastique en une seule pièce (14).

2. Dispositif d'assemblage selon la revendication 1, dans lequel il y a deux groupes de saillies, les saillies (11) d'un groupe alternant avec les saillies (12) de l'autre groupe, les saillies (11) du premier groupe étant assemblées rigidement avec le noyau (10) de manière à s'étendre dans un plan commun à partir de là, les saillies (12) de l'autre groupe étant par contre reliées au noyau par des articulations en une seule pièce (14), de manière à pouvoir pivoter, à partir de positions dans lesquelles elles sont parallèles audit plan commun, dans des positions dans lesquelles elles sont inclinées d'un côté dudit plan commun.

3. Dispositif d'assemblage selon la revendication 2, dans lequel les saillies (11) du premier groupe sont essentiellement situées entre deux plans parallèles contenant respectivement des faces d'extrémité opposées du noyau (10), les saillies (12) de l'autre groupe étant essentiellement situées à l'extérieur de la zone située entre les deux dits plans.

4. Dispositif d'assemblage selon la revendication 2 ou 3, dans lequel il y a au moins quatre saillies dans chaque groupe.

5. Dispositif d'assemblage selon la revendication 1, dans lequel toutes les saillies (11 et 12) sont reliées au noyau (10) par des articulations en une seule pièce (14), de manière à pouvoir pivoter, à partir de positions dans lesquelles elles sont toutes dans un plan unique ou parallèles à ce plan, dans des positions dans lesquelles elles sont inclinées par rapport audit plan unique.

6. Dispositif d'assemblage selon l'une quelconque des revendications précédentes, dans lequel chaque saillie (11 et 12) a une section transversale triangulaire ou sensiblement triangulaire.

7. Dispositif d'assemblage selon la revendication 6 quand elle dépend de l'une quelconque des revendications 2 à 4, dans lequel les sommets des deux groupes de saillies (11 et 12) sont disposés pour être dirigés vers des directions opposées en les considérant avec les saillies articulées (12) placées dans des positions où elles sont situées parallèlement audit plan commun.

8. Dispositif d'assemblage selon la revendication 6 quand elle dépend de la revendication 5, dans lequel les sommets de toutes les saillies (11 et 12) sont dirigés dans la même direction en considérant ces saillies dans des positions dans lesquelles elles sont toutes dans ledit plan unique ou parallèles à ce plan.

9. Dispositif d'assemblage selon l'une quelconque des revendications précédentes, dans lequel le noyau (10) présente un trou (16) le traversant en direction axiale.

10. Construction en treillis comportant plusieurs dispositifs d'assemblage selon l'une quelconque des revendications précédentes et plusieurs éléments allongés (15) qui ont été ajustés par poussée sur les saillies (11 et 12).

11. Construction en treillis selon la revendication 10, dans laquelle les éléments allongés (15) comportent au moins des extrémités tubulaires cylindriques ou sensiblement cylindriques.

12. Construction en treillis selon la revendication 11, dans laquelle au moins les extrémités cylindriques des éléments allongés (15) sont en matière plastique déformable.

FIG.1.

FIG.2.

FIG.3.

FIG.4.